# FASCICULE DE BREVET EUROPEEN

(11) **EP 2 653 377 B1**
(45) Date de publication et mention de la délivrance du brevet: **23.07.2014**
(21) Numéro de dépôt: 13001217.2
(22) Date de dépôt: 11.03.2013
(51) Int. Cl.: B64C 3/28, B64C 5/02

(54) **Surface aérodynamique portante d'aéronef, et aéronef muni de ladite surface aérodynamique portante**
Aerodynamische Tragfläche eines Luftfahrzeugs, und mit einer solchen aerodynamischen Tragfläche ausgestattetes Luftfahrzeug
Aerofoil surface of an aircraft, and aircraft comprising said aerofoil surface

(30) Priorité: 19.04.2012 FR 1201151
(43) Date de publication de la demande: 23.10.2013
(73) Titulaire: Airbus Helicopters, 13725 Marignane Cedex (FR)
(72) Inventeur: Lecerf, Luc, 13090 Aix en Provence (FR); Moreau, Vincent, 13001 Marseille (FR); Maraninchi, Xavier, 13014 Marseille (FR); Sicard, Jean-Charles, 13002 Marseille (FR)
(74) Mandataire: GPI & Associés

(56) Documents cités:
- EP-A2- 2 130 762
- EP-A2- 2 196 391
- DE-A1-102005 060 958
- US-A- 2 390 761
- US-A1- 2010 148 007
- JOHN L K: "Wing Leading Edge Design With Composites To Meet Bird Strike Requirements", COMPOSITES MANUFACTURING, BUTTERWORTH SCIENTIFIC, GUILDFORD, SURREY, GB, 1 janvier 1991 (1991-01-01), pages 3-18, XP008022816, ISSN: 0956-7143

## Description

La présente invention concerne une surface aérodynamique d'aéronef, et un aéronef muni de cette surface aérodynamique. Plus particulièrement, l'invention vise un empennage, et notamment un empennage d'un aéronef muni d'une voilure tournante.

Un empennage est une surface portante fixe qui est généralement disposée à l'arrière d'un fuselage d'un aéronef. Dès lors, un empennage est étudié spécialement pour développer des forces susceptibles de stabiliser et/ou de contrôler le mouvement de l'aéronef en tangage, voire le mouvement en lacet de cet aéronef.

Un empennage peut comprendre un ensemble de surfaces aérodynamiques sensiblement horizontales et de surfaces aérodynamiques sensiblement verticales.

Les surfaces sensiblement horizontales ont pour fonction d'optimiser notamment la stabilité du mouvement en tangage de l'aéronef. De telles surfaces sensiblement horizontales sont classiquement appelées « plan fixe » ou encore « stabilisateur horizontal » voire « empennage horizontal ». Il est à noter qu'un stabilisateur horizontal peut comprendre une partie mobile appelée « gouverne de profondeur ».

Un stabilisateur horizontal peut traverser transversalement un fuselage d'aéronef en s'étendant de part et d'autre de ce fuselage, ou encore, s'étendre à partir du fuselage sur un seul côté. Un stabilisateur horizontal s'étendant de part et d'autre d'un fuselage peut comprendre une unique surface aérodynamique traversant le fuselage ou encore deux surfaces aérodynamiques s'étendant à partir du fuselage respectivement selon deux directions opposées.

Indépendamment de la réalisation du stabilisateur horizontal, ce stabilisateur horizontal comporte un système de fixation au fuselage.

Les surfaces sensiblement verticales ont pour fonction d'optimiser notamment la stabilité du mouvement en roulis de l'aéronef. De telles surfaces sensiblement verticales sont classiquement appelées « dérive ». Une dérive peut inclure une partie mobile dénommée « gouverne de direction »

Ainsi, un aéronef comporte classiquement une surface aérodynamique munie d'un système de fixation à un fuselage, tel qu'un empennage.

Par ailleurs, un tel organe d'un aéronef saillant du fuselage est susceptible d'être impacté en vol par un objet, tel qu'un oiseau. Un empennage peut être sujet à un risque d'impact avec un oiseau lorsque cet empennage représente une saillie non négligeable vers l'extérieur de l'aéronef.

Un endommagement d'un empennage suite à un impact d'oiseau pouvant avoir une influence sur la sécurité d'un vol, un constructeur tend à optimiser les empennages contre ce type de choc.

Plus particulièrement, un impact d'oiseau risque d'entraîner la rupture du système de fixation d'une surface aérodynamique portante à un fuselage d'un aéronef, un impact avec un oiseau générant des efforts indus sur ce système de fixation.

Classiquement, une surface aérodynamique portante comporte une structure principale enserrant un longeron. De plus, la surface aérodynamique est munie au niveau de son bord d'attaque d'une structure avant protectrice. De fait, cette structure avant est dénommée par extension « bord d'attaque » par l'homme du métier.

On utilise par la suite les expressions « structure principale » et « structure avant » par commodité et dans un souci de clarté.

Par exemple, la structure avant est fixée à un longeron de la surface aérodynamique par des nervures.

Dès lors, lorsqu'un oiseau impacte la structure avant, cette structure avant se déforme sans arrêter l'oiseau. Cet oiseau pénètre à l'intérieur de l'empennage puis impacte le longeron de la structure aérodynamique.

Ce longeron est par définition très résistant. Le longeron ne se déforme alors pas sous l'impact. Par contre, ce longeron recule et pivote autour du système de fixation de la surface aérodynamique.

Ce système de fixation se déforme, et peut à l'extrême se rompre.

Pour minimiser les risques d'un impact, on connaît un premier dispositif qui est implémenté notamment sur un capot d'une boîte de transmission de puissance arrière de l'hélicoptère connu sous la marque EC175®.

Ce premier dispositif met en oeuvre un couteau fixé sur l'extérieur d'une structure avant du capot. Ce couteau vise à découper un oiseau le cas échéant pour protéger le capot, et plus particulièrement son système de fixation au corps de l'aéronef.

Ce premier dispositif donne satisfaction. Cependant, le couteau perturbe l'écoulement aérodynamique de l'air autour du capot.

De plus, le capot est renforcé pour permettre la fixation du couteau. La structure avant étant généralement dimensionnée pour résister à de faibles charges extérieures, cette structure avant doit être modifiée pour pouvoir accueillir le couteau.

La rigidification de la structure avant en résultant tend à induire une augmentation non négligeable de sa masse.

De plus, la fabrication de l'empennage se trouve complexifiée.

On connaît un deuxième dispositif explicité par le document EP 2 196 391.

Ce deuxième dispositif consiste à renforcer la structure avant d'une surface aérodynamique. Le renforcement peut être obtenu par le biais d'un usinage chimique ou encore par l'ajout d'un renfort en forme de Y. Le but de ce deuxième dispositif est donc de maximiser l'énergie absorbée par la structure avant suite à un impact avec un oiseau.

Ce deuxième dispositif est aussi satisfaisant. Cependant le renforcement de la structure avant induit une augmentation significative de la masse de la surface aérodynamique. En outre, la fabrication de cette surface aérodynamique et plus particulièrement de la structure avant est complexifiée.

Le premier dispositif suggère donc de modifier la structure avant par l'ajout d'un couteau, alors que le deuxième dispositif suggère de modifier une structure avant en la renforçant.

On connaît aussi le document US 7.931.233. Ce document vise une peau protectrice formant un bord d'attaque.

L'arrière plan technologique inclut aussi le document « Wing Leading Edge Design With Composites To Meet Bird Design Strike Requirements », COMPOSITES MANUFACTURING, BUTTERWORTH SCIENTIFIC, GUILDFORD, SURREY, GB, 1 janvier 1991, PAGES 3-18.

Ce document montre une surface aérodynamique selon le préambule de la revendication 1.

Cet arrière plan technologique inclut en outre les documents US 2 390 761, US 2010/148007, EP 2 130 762, DE 10 2005 060958.

La présente invention a alors pour objet de proposer une surface aérodynamique visant à éviter la désolidarisation de la surface aérodynamique d'un fuselage, suite à un impact avec un corps extérieur et notamment un oiseau. Une telle surface aérodynamique peut être un empennage d'aéronef, tel qu'un stabilisateur horizontal ou vertical. Tout autre type de surface aérodynamique est envisageable.

Selon l'invention, une surface aérodynamique est munie d'une structure principale comportant au moins un longeron et d'une structure avant formant un bord d'attaque, cette surface aérodynamique comportant un espace libre entre la structure principale et ladite structure avant. On entend par « espace libre » un espace creux susceptible d'accueillir de fait des organes divers.

Cette surface aérodynamique inclut de plus dans l'espace libre un organe déviateur rigide fixé à la structure principale. Cet organe déviateur est muni d'une arête vive en regard de la structure avant afin de dévier un obstacle extérieur impactant la structure avant.

L'expression « arête vive » est bien connue de l'homme du métier. Cette expression désigne une arête bien marquée.

Les expressions « arête tranchante » où plus simplement « arête » peuvent aussi être employées.

L'organe déviateur peut dévier un obstacle extérieur tel qu'un oiseau, soit en modifiant se trajectoire soit en coupant en au moins deux morceaux cet obstacle. On entend donc par « dévier » soit une première action consistant à dévier en tant que tel un corps, soit une deuxième action consistant à couper un corps, soit une action combinant la première action et la deuxième action précitées.

L'invention ne vise pas à protéger une surface avant d'une surface aérodynamique mais propose de protéger notamment la fixation de cette surface aérodynamique.

Ainsi, lorsqu'un oiseau impacte la structure avant, cette structure avant se déforme sans arrêter l'oiseau. Cet oiseau pénètre dans l'espace libre puis impacte l'organe déviateur de la structure aérodynamique.

Cet organe déviateur découpe ou dévie l'oiseau qui n'impacte pas le longeron de la structure principale.

L'organe déviateur étant fixé à la structure principale, cet organe déviateur tend à exercer un effort sur cette structure principale. La structure principale pivote et exerce un effort sur le système de fixation de la surface aérodynamique au véhicule. Cependant, la demanderesse note que les efforts exercés sont moindres qu'en l'absence de l'organe déviateur et n'entrainent pas la rupture du système de fixation. L'énergie absorbée par l'organe déviateur est en effet suffisante pour empêcher la désolidarisation de la surface aérodynamique, d'autant plus que l'oiseau n'impacte pas la structure principale.

Une telle surface aérodynamique peut donc être un stabilisateur horizontal et comporter un système de fixation à un fuselage d'aéronef. Par exemple, la surface aérodynamique est un empennage pourvu d'une ferrure de fixation à un pylône de queue de l'aéronef.

Dans ces conditions, l'organe déviateur représente un couteau agencé dans l'espace libre délimité dans une structure avant, contrairement à l'état de la technique prévoyant un couteau agencé sur la face extérieure où intérieur d'une telle structure avant. Ainsi, cet organe déviateur n'a pas d'incidence sur l'écoulement aérodynamique de l'air autour de la surface aérodynamique.

De plus, cet organe déviateur n'étant pas fixé sur la structure avant, l'agencement de l'organe déviateur n'implique pas une modification de la structure avant. Dans ces conditions, cette structure avant ne doit plus être dimensionnée afin de résister à un impact d'oiseau par exemple. Par conséquent, la structure avant peut être une simple peau aisément fabricable et de faible masse pour uniquement assurer une fonction aérodynamique.

En outre, l'organe déviateur étant fixé à la structure principale et par exemple au longeron, cet organe déviateur est fixé à une pièce structurellement résistante.

La structure avant et l'organe déviateur sont en effet dissociés et remplissent chacun une fonction qui leur est propre. L'organe déviateur n'est effectivement pas en contact avec la structure avant.

Par ailleurs, la mise en place de l'organe déviateur permet d'éviter le renforcement d'un système de fixation tout en empêchant la désolidarisation de la surface aérodynamique.

L'implémentation de l'invention sur un véhicule existant est alors envisageable.

L'invention peut de plus comporter une ou plusieurs des caractéristiques additionnelles qui suivent.

Par exemple, l'organe déviateur peut être parallèle au bord d'attaque de la surface aérodynamique. L'arête vive est par exemple en vis-à-vis et en parallèle du bord d'attaque de la surface aérodynamique.

Cet agencement maximise l'efficacité de découpe de l'oiseau en cas de contact de l'oiseau cherchant à traverser la structure.

Par ailleurs, la structure avant peut être métallique.

Une structure avant métallique présente l'avantage de générer un nombre limité de débris suite à un impact, par rapport à une structure composite par exemple. En effet, une structure avant en matériaux composites est très résistante et participe l'absorption d'énergie, alors qu'une structure avant métallique présente une faible résistance et génère peu de débris.

Dans le cadre d'un empennage placé en amont d'un rotor, une structure avant métallique parait intéressante pour minimiser les risques de dégradation du rotor suite à un impact sur l'empennage.

La structure avant peut donc comprendre une feuille métallique présentant la forme requise pour optimiser l'écoulement aérodynamique de l'air autour de la surface aérodynamique.

Selon un autre aspect, l'organe déviateur peut comporter deux ailes de fixation se croisant au niveau de l'arête vive, chaque aile étant fixée à la structure principale par au moins un support disposé dans ledit espace libre. L'organe déviateur possède alors une forme de V.

Un tel organe déviateur est relativement simple et peut être aisément fabriqué.

En outre, la structure avant étant fixée à la structure principale par au moins une nervure, au moins un support est fixé à une nervure.

Par exemple, au moins un support est fixé au longeron de la structure principale par une nervure, cette nervure étant fixée à ce longeron.

L'organe déviateur peut alors être fixé sur des éléments existants d'une surface aérodynamique.

Un support peut aussi être directement fixé au longeron.

De plus, si la structure avant est fixée à la structure principale par au moins une nervure, cette nervure peut comporter une ouverture qui est ouverte vers la structure avant et qui est traversée par l'organe déviateur.

Cette caractéristique facilite l'agencement de l'organe déviateur dans l'espace libre.

Enfin, outre une surface aérodynamique, l'invention vise un aéronef muni d'un fuselage. Cet aéronef comporte alors au moins une surface aérodynamique selon l'invention fixée audit fuselage.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef selon l'invention,
- la figure 2, une vue d'une surface aérodynamique selon l'invention,
- la figure 3, une coupe d'une surface aérodynamique selon l'invention, et
- la figure 4, une vue tridimensionnelle montrant un organe déviateur.

Les éléments présents dans plusieurs figures distinctes sont affectés d'une seule et même référence.

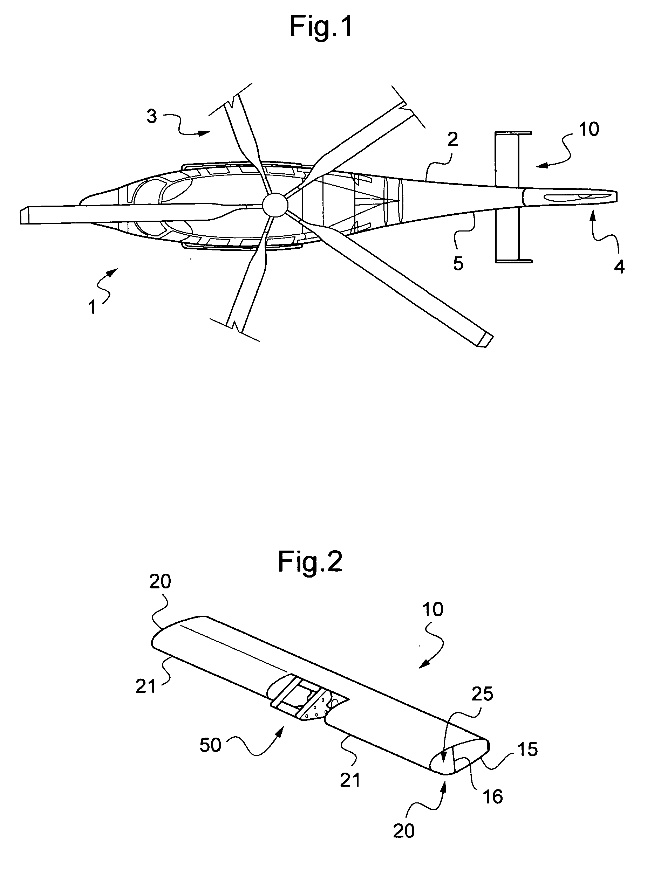

La figure 1 présente un aéronef 1 muni d'un fuselage 2.

Cet aéronef 1 peut être un aéronef à voilure tournante. Par exemple, l'aéronef 1 peut comprendre un rotor principal 3 de sustentation et de propulsion, ainsi qu'un rotor arrière 4 de contrôle en lacet.

L'aéronef 1 peut aussi être un aéronef muni d'une voilure fixe.

Par ailleurs, l'aéronef 1 comporte une surface aérodynamique 10 portée par le fuselage 2. Une telle surface aérodynamique 10 est par exemple un stabilisateur horizontal fixé à un ensemble arrière 5 de l'aéronef 1.

En référence à la figure 2, la surface aérodynamique 10 inclut une structure principale 15. Cette structure principale 15 est pourvue d'un longeron 16 solidaire d'un système de fixation 50.

Le système de fixation 50 permet alors de fixer la surface aérodynamique à un organe de l'aéronef 1, par exemple au fuselage 2.

De plus, la surface aérodynamique 10 comporte une structure avant 20 définissant son bord d'attaque 21.

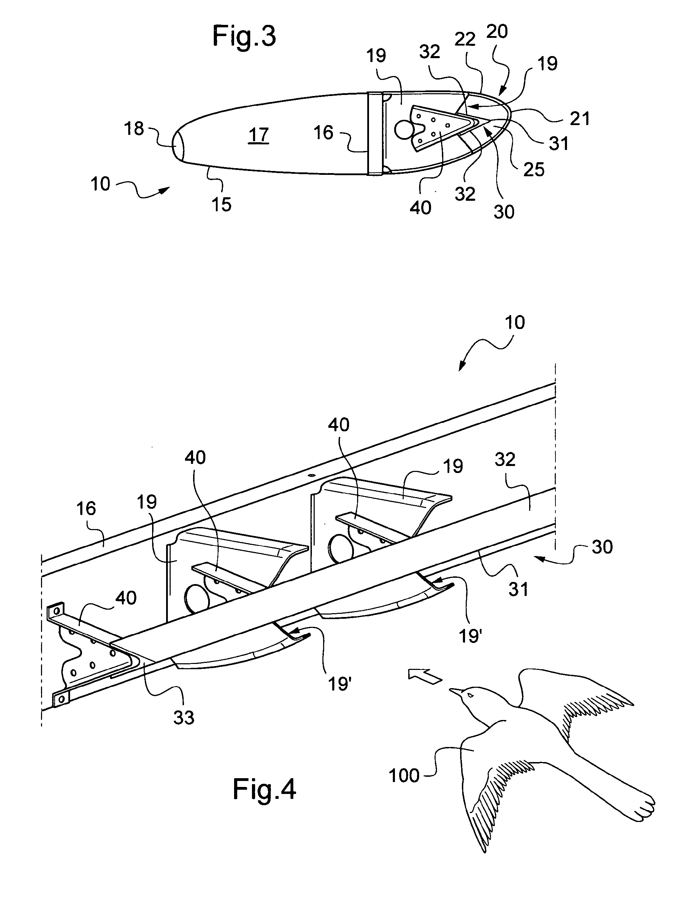

En référence à la figure 3, la surface aérodynamique comporte une espace libre 25 délimité par la structure avant 20 et la structure principale 15.

La structure avant 20 est favorablement fixée à la structure principale 15 par une pluralité de nervures 19 présentes dans cet espace libre 25. Chaque nervure 19 permet éventuellement de fixer la structure avant 20 au longeron 16 de la structure principale 15.

Une telle structure avant comporte par exemple une plaque métallique courbée fixée par des moyens usuels aux nervures.

Il est à noter que la structure principale 15 peut comprendre des moyens de remplissage 17 entre ces parois d'extrados et d'intrados, voire un arêtier 18 au niveau du bord de fuite de la surface aérodynamique.

Par ailleurs, conformément à l'invention, la surface aérodynamique 10 comporte un organe déviateur 30 rigide indépendant et distinct de la structure avant 20.

Cet organe déviateur 30 est fixé à la structure principale 15 en étant agencé dans l'espace libre 25.

L'organe déviateur 30 s'étend selon l'envergure de la surface aérodynamique 10 parallèlement au longeron 15 et au bord d'attaque 21, éventuellement sans jamais être en contact avec la structure avant 20.

L'organe déviateur comporte une arête vive 31 en regard de la structure avant, et plus particulièrement du bord d'attaque 21. Cette arête vive 31 a pour fonction de dévier un obstacle extérieur traversant la structure avant 20 tel qu'un oiseau, éventuellement en coupant cet obstacle extérieur.

Plus particulièrement, l'organe déviateur peut comprendre deux ailes de fixation 32, l'intersection de ces ailes de fixation 32 formant l'arête vive 31. L'arête vive 31 est favorablement effilée, voire coupante.

Chaque aile de fixation 32 peut alors être fixée à la structure principale par un support 40. Au moins un support 40 peut alors être solidarisé par des moyens usuels à une nervure 19 dans l'espace libre 25.

Toutefois, en référence à la figure 4, un support 40 peut être directement fixé à la structure principale 15, et au longeron 16 par exemple.

En outre, chaque nervure 19 représentée possède une ouverture 19' en regard de la structure avant, chaque ouverture 19' étant traversée par l'organe déviateur.

Dans ces conditions, un obstacle extérieur 100 impactant la surface aérodynamique peut traverser localement la structure avant.

Cet obstacle extérieur atteint alors l'organe déviateur 30. Cet organe déviateur absorbe une partie de l'énergie résultant du choc et dévie l'obstacle vers l'extérieur. Par exemple, l'organe déviateur peut couper en deux un oiseau.

La surface aérodynamique risque néanmoins d'effectuer un mouvement rotatif suite à l'impact. Cependant, l'organe déviateur ayant absorbée une partie de l'énergie résultant du choc et l'obstacle ayant été dévié vers l'extérieur de la surface aérodynamique, cette rotation peut endommager le système de fixation 50 dans la limite acceptable de dimensionnement des composants.

L'invention permet donc d'éviter une désolidarisation de la surface aérodynamique du fuselage 2 suite à un impact avec un organe extérieur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Surface aérodynamique (10) munie d'une structure principale (15) comportant au moins un longeron (16) et d'une structure avant (20) formant un bord d'attaque (21), ladite surface aérodynamique (10) comportant un espace libre (25) entre ladite structure principale (15) et ladite structure avant (20), ladite surface aérodynamique (10) incluant dans ledit espace libre (25) un organe déviateur (30) rigide fixé à la structure principale (15), ledit organe déviateur (30) étant muni d'une arête vive (31) en regard de ladite structure avant (20) afin de dévier un obstacle (100) extérieur impactant ladite structure avant (20), **caracterisée en ce que** ledit organe déviateur (30) n'est pas en contact avec ladite structure avant (20).

2. Surface aérodynamique selon la revendication 1,
**caractérisée en ce que** ledit organe déviateur (30) est parallèle au bord d'attaque (21) de ladite surface aérodynamique (10).

3. Surface aérodynamique selon l'une quelconque des revendications 1 à 2,
**caractérisée en ce que** ladite structure avant (20) est métallique.

4. Surface aérodynamique selon l'une quelconque des revendications 1 à 3,
**caractérisée en ce que** ledit organe déviateur (30) comporte deux ailes de fixation (32, 33) se croisant au niveau de ladite arête (31), chaque aile de fixation (32, 33) étant fixée à la structure principale (15) par au moins un support (40).

5. Surface aérodynamique selon la revendication 4,
**caractérisée en ce que**, ladite structure avant (20) étant fixée à la structure principale (15) par au moins une nervure (19), au moins un support (40) est fixé à une nervure (19).

6. Surface aérodynamique selon la revendication 5,
**caractérisée en ce que** ladite au moins une nervure (19) est fixée à un longeron (16).

7. Surface aérodynamique selon la revendication 5,
**caractérisée en ce que** ladite structure avant (20) étant fixée à la structure principale (15) par au moins une nervure (19), ladite nervure (19) comporte une ouverture (19') qui est ouverte vers ladite structure avant (20) et qui est traversée par ledit organe déviateur (30).

8. Surface aérodynamique selon l'une quelconque des revendications 1 à 7,
**caractérisée en ce que** ladite surface aérodynamique (10) est un empennage.

9. Surface aérodynamique selon l'une quelconque des revendications 1 à 8,
**caractérisée en ce que** ladite surface aérodynamique (10) comporte un système de fixation (50) à un fuselage (2) d'aéronef.

10. Surface aérodynamique selon l'une quelconque des revendications 1 à 9,
**caractérisée en ce que** ledit organe déviateur (30) est fixé audit longeron (16).

11. Aéronef (1) muni d'un fuselage (2),
**caractérisé en ce que** cet aéronef (1) comporte au moins une surface aérodynamique (10) selon l'une quelconque des revendications 1 à 10 qui est fixée audit fuselage (2).

## Patentansprüche

1. Aerodynamische Tragfläche (10) mit einem Hauptaufbau (15), der mindestens einen Längsträger (16) und einen vorderen Aufbau (20) aufweist, der eine Vorderkante (21) bildet, wobei die aerodynamische Tragfläche (10) einen freien Raum (25) zwischen dem Hauptaufbau (15) und dem vorderen Aufbau (20) aufweist, wobei die aerodynamische Tragfläche (10) in dem freien Raum (25) ein steifes Ablenkmittel (30) aufweist, das an dem Hauptaufbau (15) befestigt ist, wobei das Ablenkmittel (30) mit einer scharfen Kante (31) gegenüber dem vorderen Aufbau (20) versehen ist, um ein äußeres Hindernis (100), welches auf den vorderen Aufbau (20) auftrifft, abzulenken,
**dadurch gekennzeichnet, dass**
das Ablenkmittel (30) nicht mit dem vorderen Aufbau (20) in Berührung steht.

2. Aerodynamische Tragfläche nach Anspruch 1,
**dadurch gekennzeichnet, dass** das Ablenkmittel (30) parallel zu der Vorderkante (21) der aerodynamischen Tragfläche (10) verläuft.

3. Aerodynamische Tragfläche nach einem der Ansprüche 1 bis 2,
**dadurch gekennzeichnet, dass** der vordere Aufbau (20) aus Metall ist.

4. Aerodynamische Tragfläche nach einem der Ansprüche 1 bis 3,
**dadurch gekennzeichnet, dass** das Ablenkmittel (30) zwei Befestigungsschenkel (32, 33) aufweist, die sich auf der Höhe der Kante (31) kreuzen, wobei jeder Befestigungsschenkel (32, 33) durch mindestens einen Träger (40) an dem Hauptaufbau (15) befestigt ist.

5. Aerodynamische Tragfläche nach Anspruch 4,
**dadurch gekennzeichnet, dass** der vordere Aufbau (20) durch mindestens einen Steg (19) an dem Hauptaufbau (15) befestigt ist, wobei mindestens ein Träger (40) an einem Steg (19) befestigt ist.

6. Aerodynamische Tragfläche nach Anspruch 5,
**dadurch gekennzeichnet, dass** der mindestens eine Steg (19) an einem Längsträger (16) befestigt ist.

7. Aerodynamische Tragfläche nach Anspruch 5,
**dadurch gekennzeichnet, dass** der vordere Aufbau (20) durch mindestens einen Steg (19) an dem Hauptaufbau (15) befestigt ist, wobei der Steg (19) eine Öffnung (19') aufweist, die zum vorderen Aufbau (20) hin offen ist und die von dem Ablenkmittel (30) durchquert wird.

8. Aerodynamische Tragfläche nach einem der Ansprüche 1 bis 7,
**dadurch gekennzeichnet, dass** die aerodynamische Tragfläche (10) ein Leitwerk ist.

9. Aerodynamische Tragfläche nach einem der Ansprüche 1 bis 8,
**dadurch gekennzeichnet, dass** die aerodynamische Tragfläche (10) ein System (50) zur Befestigung an einem Rumpf (2) eines Flugzeugs aufweist.

10. Aerodynamische Tragfläche nach einem der Ansprüche 1 bis 9,
**dadurch gekennzeichnet, dass** das Ablenkmittel (30) an dem Längsträger (16) befestigt ist.

11. Luftfahrzeug (1) mit einem Rumpf (2),
**dadurch gekennzeichnet, dass** das Luftfahrzeug (1) mindestens eine aerodynamische Tragfläche (10) nach einem der Ansprüche 1 bis 10 aufweist, die an dem Rumpf (2) befestigt ist.

## Claims

1. Aerodynamic surface (10) provided with a main structure (15) comprising at least one spar (16) and a front structure (20) forming a leading edge (21), said aerodynamic surface (10) comprising an empty space (25) between said main structure (15) and said front structure (20), said aerodynamic surface (10) including in said empty space (25) a rigid deflector member (30) fastened to the main structure (15), said deflector member (30) being provided with a sharp edge (31) facing said front structure (20) in order to deflect an external obstacle (100) impacting said front structure (20), **characterised in that** said deflector member (30) is not in contact with said front structure (20).

2. Aerodynamic surface according to Claim 1,
**characterised in that** said deflector member (30) is parallel to the leading edge (21) of said aerodynamic surface (10).

3. Aerodynamic surface according to any one of Claims 1 to 2,
**characterised in that** said front structure (20) is made of metal.

4. Aerodynamic surface according to any one of Claims 1 to 3,
**characterised in that** said deflector member (30) comprises two fastening wings (32, 33) intersecting at said edge (31), each fastening wing (32, 33) being fastened to the main structure (15) by at least one bracket (40).

5. Aerodynamic surface according to Claim 4,
**characterised in that** said front structure (20) is fastened to the main structure (15) by at least one rib (19), and at least one bracket (40) is fastened to a rib (19).

6. Aerodynamic surface according to Claim 5,
**characterised in that** said at least one rib (19) is fastened to a spar (16).

7. Aerodynamic surface according to Claim 5,
**characterised in that** said front structure (20) is fastened to the main structure (15) by at least one rib (19), and said rib (19) has an opening (19') which is open towards said front structure (20) and through which said deflector member (30) passes.

8. Aerodynamic surface according to any one of Claims 1 to 7,
**characterised in that** said aerodynamic surface (10) is a stabiliser.

9. Aerodynamic surface according to any one of Claims 1 to 8,
**characterised in that** said aerodynamic surface (10) comprises a fastening system (50) for fastening it to an aircraft fuselage (2).

10. Aerodynamic surface according to any one of Claims 1 to 9,
**characterised in that** said deflector member (30) is fastened to said spar (16).

11. Aircraft (1) provided with a fuselage (2),
**characterised in that** said aircraft (1) comprises at least one aerodynamic surface (10) according to any one of Claims 1 to 10 which is fastened to said fuselage (2).
